# EUROPÄISCHE PATENTANMELDUNG

(11) **EP 1 744 189 A1**
(43) Veröffentlichungstag der Anmeldung: **17.01.2007**
(21) Anmeldenummer: 05015303.0
(22) Anmeldetag: 14.07.2005
(51) Int. Cl.: G02B 6/02

(54) **Hochleistungslichtleiter mit Streuzentren**

(71) Anmelder: TRUMPF Laser GmbH + Co. KG, 78713 Schramberg (DE)
(72) Erfinder: Kumkar, Malte, 78713 Schramberg (DE); Huber, Rudolf, 78647 Trossingen (DE)
(74) Vertreter: Kohler Schmid Möbus

(57) **Zusammenfassung**

Der erfindungsgemäße Hochleistungslichtleiter (1) für die Übertragung von Laserstrahlung hoher Leistung (> 500 W) mit einer Strahlqualität von besser 25 mm mrad umfasst einen Lichtleiterkern (2) aus Quarzglas, einen den Lichtleiterkern (2) umgebenden inneren Mantel (3) aus Quarzglas mit niedrigerer Brechzahl als der Lichtleiterkern (2), einen den inneren Mantel (3) umgebenden äußeren Mantel (4) aus Quarzglas mit höherer Brechzahl als der innere Mantel (3) und mindestens eine den äußeren Mantel (4) umgebende Umhüllung (5), wobei erfindungsgemäß der Lichtleiter (1; 1') im Wesentlichen über seine gesamte Länge Streuzentren (6; 6') zur Streuung der außerhalb des Lichtleiterkerns (2) geführten Laserstrahlung aufweist.

## Beschreibung

Die vorliegende Erfindung betrifft einen Hochleistungslichtleiter für die Übertragung von Laserstrahlung hoher Leistung (> 500 W) mit einer Strahlqualität von besser 25 mm mrad, mit einem Lichtleiterkern aus Quarzglas, mit einem den Lichtleiterkern umgebenden inneren Mantel aus Quarzglas mit niedrigerer Brechzahl als der Lichtleiterkern, mit einem den inneren Mantel umgebenden äußeren Mantel aus Quarzglas mit gleicher oder höherer Brechungzahl als der innere Mantel und mit mindestens einer den äußeren Mantel umgebenden Umhüllung, wobei alle Quarzglasschichten Dotierungen zur Anpassung der Brechzahl enthalten können.

Lichtleiter werden in Verbindung mit Hochleistungs-Lasern genutzt, um die Laserstrahlung vom Laser über eine Strecke zu einer Anwendung, z.B. zu einer Materialbearbeitungsvorrichtung, zu leiten. Lichtleiter (Lichtleitfasern) zur Übertragung von Laserstrahlung im Kilowatt-Leistungsbereich bestehen üblicherweise aus einem Quarzglas-Kern (Lichtleiterkern, core) und einem Quarzglas-Mantel (Lichtleitermantel, cladding), der durch geeignete Dotierung oder Mikrostrukturierung eine geringere Brechzahl aufweist als der Lichtleiterkern. Der Lichtleiterkern leitet Laserlicht bis zu einem maximalen Akzeptanzwinkel mit Hilfe der Totalreflexion. Der Lichtleitermantel dient nicht zur Lichtübertragung, sondern liefert die für die Totalreflexion erforderliche geringere Brechzahl. Auf dem Quarzglas-Mantel ist zum Schutz des Lichtleiters eine Schutzumhüllung aus einem flexiblen Material (z.B. Silikon, Acrylat) aufgebracht, die im allgemeinen eine niedrigere Brechzahl aufweist als der Quarzglas-Mantel und das Laserlicht teilweise absorbiert. Durch die Verbesserung der Strahlqualität der Laser (z.B. beim Scheibenlaser) kommen Lichtleiter mit immer kleinerem Kerndurchmesser zum Einsatz. Für eine gute Handhabbarkeit des Lichtleiters und gute Winkelerhaltung der geführten Laserstrahlung ist es jedoch notwendig, den Außendurchmesser des Lichtleiters beizubehalten. Dazu wird auf den ersten, inneren Quarzglas-Mantel ein zweiter, äußerer Quarzglas-Mantel aufgebracht, der üblicherweise eine höhere Brechzahl aufweist als der erste, innere Quarzglas-Mantel. Der äußere Quarzglas-Mantel ist dann von der flexiblen Schutzumhüllung umgeben.

Zur Einkopplung in den Lichtleiter wird ein Laserstrahl beispielsweise auf das Eintrittsende des Lichtleiterkerns fokussiert. Dabei kann ein Teil der Laserstrahlung auch in den Mantelbereich gelangen. Dies tritt insbesondere bei der notwendigen gegenseitigen Justierung von Laserstrahl und Lichtleiter auf. Ebenso kann Strahlungsleistung durch Rückstreuung und Reflexion vom bearbeiteten Werkstück in den Mantelbereich gelangen. Dieser in den Lichtleitermantel gelangende Anteil der Laserstrahlung kann durch Totalreflexion auch außerhalb des Lichtleiterkerns geführt werden, wenn der Lichtleiter von einer flexiblen Schutzumhüllung umgeben ist, die eine geringere Brechzahl aufweist als der Mantelbereich. Wird - z.B. an Faserbiegungen oder Spleißverbindungen - die Totalreflexion des Mantelbereichs gestört, so kann Laserstrahlung aus dem Quarzglas-Mantel in die Schutzumhüllung eindringen bzw. diese durchdringen. Durch die Strahlungsabsorption in der Schutzumhüllung kann diese erhitzt und zerstört werden. Die nicht im Lichtleiterkern geführte Strahlung kann insbesondere an den Endbereichen des Lichtleiters zu Schäden führen. Zusätzlich wird die Strahlqualität der übertragenen Laserstrahlung verschlechtert, was sich auf nachfolgende Optiken und die Bearbeitungsqualität negativ auswirken kann.

Um diese Probleme zu vermindern, ist es z.B. aus DE 43 05 313 C1 bekannt, an den Enden des Lichtleiters die in den Mantelbereich gelangende Laserstrahlung aus dem Lichtleiter auszukoppeln und in einen gekühlten Absorber zu lenken, der in radialem Abstand zum Lichtleiter angeordnet ist. Die Auslenkung der Laserstrahlung erfolgt dabei beispielsweise durch eine Aufrauhung der Außenoberfläche des Mantelbereichs oder durch auf die Außenoberfläche des Lichtleiter-Mantels aufgebrachte Materialien. Durch die Auskopplung eines Teils der Laserstrahlung sinkt die Lichtleistung im Lichtleiter-Mantel nach einer kurzen Strecke auf ein ungefährliches Maß.

Wird durch die Verbesserung der Strahlqualität der zu übertragenden Laserstrahlung der Kerndurchmesser des Lichtleiters kleiner, so wird der äußere Quarzglas-Mantel bei unverändertem Außendurchmesser des Lichtleiters relativ zum Lichtleiterkern dicker. Um in einer Anordnung, wie sie beispielsweise aus DE 43 05 313 C1 bekannt ist, die innerhalb der Einheit aus innerem und äußerem Quarzglas-Mantel geführte Laserstrahlung auszukoppeln, müsste die Auskoppelstrecke länger ausgeführt werden, da die durch Totalreflexion geführte Strahlung seltener auf die Mittel zum Auslenken des Laserlichts trifft und deshalb schlechter ausgekoppelt wird. Dies ist jedoch nur bis zu einer gewissen Streckenlänge sinnvoll, da sonst eine zu komplizierte Anordnung erhalten wird.

Demgegenüber stellt sich der vorliegenden Erfindung die Aufgabe, bei einem Hochleistungslichtleiter der eingangs genannten Art negative Auswirkungen durch in den Mantelbereich gelangende Laserstrahlung auf möglichst einfache Art und Weise zu vermindern.

Diese Aufgabe wird erfindungsgemäß dadurch gelöst, dass der Lichtleiter im Wesentlichen über seine gesamte Länge Streuzentren zur vorzugsweise elastischen Streuung der außerhalb des Lichtleiterkerns geführten Laserstrahlung aufweist. Die Streuzentren können im inneren Quarzglas-Mantel vorgesehen sein. Vorzugsweise sind die Streuzentren jedoch im äußeren Mantel und/oder in der Umhüllung angeordnet, um die Führung der Laserstrahlung im Lichtleiterkern nicht zu behindern. Die Streuzentren bilden vorzugsweise eine in Längsrichtung des Lichtleiters durchgehende Streuschicht und sind in Längs- und Umfangsrichtung des Lichtleiters homogen verteilt. Auch ein Lichtleiter, dessen die Streuzentren enthaltende Schicht an bestimmten Stellen, beispielsweise im Bereich der Lichtleiterenden, über kurze Strecken von einigen cm Länge unterbrochen ist, ist als erfindungsgemäß anzusehen.

Die nicht im Lichtleiterkern geführte Laserstrahlung wird an den Streuzentren gestreut und so - bevorzugt hauptsächlich im Bereich der Enden des Lichtleiters - ausgekoppelt. Falls die gesamte Strahlung nicht bereits innerhalb der Endbereiche ausgekoppelt wird, wird der Rest nach und nach über die gesamte Faserlänge des Lichtleiters an den Streuzentren herausgestreut, wobei die dabei jeweils ausgekoppelte Intensität (bei geeigneter Dimensionierung von Lichtleitfaser und Stecker) so klein ist, dass weder die Schutzumhüllung noch angrenzende Komponenten beschädigt werden. Durch die Streuzentren können weitere Maßnahmen zur gezielten Auskopplung der Laserstrahlung im Lichtleiterendbereich gegebenenfalls sogar entfallen.

In einer ersten bevorzugten Ausführungsform der Erfindung sind die im äußeren Mantel vorgesehenen Streuzentren durch im Quarzglas vorhandene, insbesondere länglich geformte Gasblasen, vorzugsweise Luftblasen, und/oder durch im Quarzglas vorhandene Mikrokristalle oder Nanopartikel gebildet.

Zur Erzeugung von Gasblasen im äußeren Quarzglas-Mantel umfasst die Lichtleitfaser-Preform eine äußerste Schicht aus opakem Quarz, d.h. Quarz mit darin enthaltenen Luftblasen. Hierfür kommt natürliches Quarz und synthetisches Quarz in Frage. Natürliches Quarz kann beispielsweise mit 10 µm-Blasen geliefert werden, synthetisches Quarz hat Blasen mit einem Durchmesser von 100 bis 150 µm. Beim Faserziehen um etwa den Faktor 100 ergeben sich dann längliche Blasen mit Durchmessern von 100 nm bzw. 10 µm und mit Längen von 10 bis 1000 µm. Zur Erzeugung von Mikrokristalliten im äußeren Quarzglas-Mantel kann bei der Herstellung des synthetischen Quarzglases für die Faser-Preform der Prozess derart gesteuert werden, dass Mikrokristallite entstehen. Beim Ziehen der Faser bleiben diese Mikrokristalle als Streuzentren erhalten. Alternativ können Nanopartikel in den Bereich der Preform eingebracht werden, der nach dem Ziehprozess den äußeren Quarzglas-Mantel bildet.

Weist der äußere Quarzglas-Mantel die Streuzentren auf, so ist die Schutzumhüllung des Lichtleiters als Kunststoffschicht mit niedrigerer oder höherer Brechzahl als der Quarzglas-Mantel ausgeführt. Zwischen der Kunststoffschicht und dem äußeren Quarzglas-Mantel kann zur Erhöhung der Leistungsfestigkeit des Lichtleiters eine weitere Quarzglas-Schicht angeordnet sein, die eine gleiche oder geringere Brechzahl aufweist als der äußere Quarzglas-Mantel.

Vorzugsweise sind die im äußeren Quarzglas-Mantel vorgesehenen Streuzentren nur in einem oberflächenfemen inneren Volumen des äußeren Mantels vorgesehen, so dass die an den inneren Mantel angrenzende Grenzfläche und die Oberfläche des äußeren Mantels keine Störungen aufweisen. So werden die Lichtführungseigenschaft des Lichtleiterkerns und die mechanische Belastbarkeit des Lichtleiters möglichst wenig beeinträchtigt.

In einer zweiten bevorzugten Ausführungsform der Erfindung ist die Umhüllung eine Kunststoffschicht, insbesondere eine Silikonschicht, die eine geringere Brechungzahl als der äußere Mantel hat und die die Streuzentren enthält. Vorzugsweise sind die Streuzentren in der Kunststoffschicht durch Nanopartikel oder Nanokristallite, insbesondere aus Aluminiumoxid, gebildet. Bei der Reflexion der im Mantelbereich geführten Laserstrahlung an der Grenzfläche zwischen Quarzglas-Mantel und Kunststoffschicht dringt die Strahlung ein kurzes Stück in die Kunststoffschicht ein und wird dort an den Streuzentren gestreut. Die Streuung erfolgt nur bis zu Eindringtiefen von wenigen µm. Bei dieser Ausführungsform der Erfindung sind in der Regel weitere Maßnahmen zum Abschwächen der im Mantelbereich des Lichtleiters geführten Strahlung im Bereich der Lichtleiterenden nötig. Der Großteil der Strahlung wird, wie beispielsweise in DE 43 05 313 C1 beschrieben, an den Lichtleiterenden ausgekoppelt. Der verbleibende Rest wird nach und nach an der Grenzfläche zum Silikon herausgestreut. Zur Erzeugung der Streuzentren werden dem Silikon vorzugsweise Nanopartikel aus Aluminiumoxid beigemischt, bevor das Silikon auf die Faser aufgebracht wird.

Der äußere Mantel kann, insbesondere im Bereich der beiden Enden des Lichtleiters, einen aufgerauten Oberflächenabschnitt zur Auskopplung von im äußeren Mantel geführter Laserstrahlung aus dem Lichtleiter aufweisen.

Die Erfindung betrifft auch ein Verfahren zur Auskopplung von in einem wie oben ausgebildeten Hochleistungslichtleiter außerhalb des Lichtleiterkerns geführter Laserstrahlung, wobei erfindungsgemäß die außerhalb des Lichtleiterkerns geführte Laserstrahlung über die gesamte Länge des Lichtleiters an Streuzentren aus dem Lichtleiter herausgestreut wird, ohne dass dabei die Umhüllung des Lichtleiters beschädigt wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform des erfindungsgemäßen Hochleistungslichtleiters; und
- Fig. 2: einen Querschnitt durch eine zweite Ausführungsform des erfindungsgemäßen Hochleistungslichtleiters.

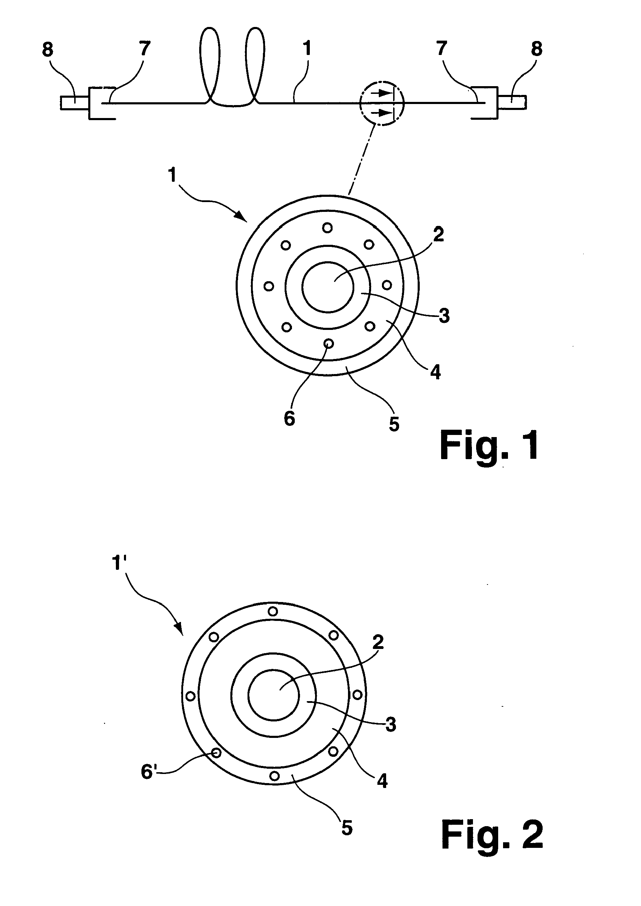

Der in **Fig. 1** gezeigte Hochleistungslichtleiter **1** dient zur Übertragung von Laserstrahlung hoher Leistung (> 500 W) mit einer Strahlqualität von besser 25 mm mrad. Der Lichtleiter 1 umfasst einen Lichtleiterkern **2** aus undotiertem oder dotiertem Quarzglas, mit einem den Lichtleiterkern 2 umgebenden inneren Mantel **3** aus fluordotiertem Quarzglas mit niedrigerer Brechzahl als der Lichtleiterkern 2, mit einem den inneren Mantel 3 umgebenden äußeren Mantel **4** aus Quarzglas mit höherer Brechzahl als der innere Mantel 3 und mit mindestens einer den äußeren Mantel 4 umgebenden Umhüllung **5** mit niedrigerer Brechzahl als der äußere Mantel 4.

Der äußere Mantel 4 weist im Wesentlichen über seine gesamte Länge Streuzentren **6** in Form von eingeschlossenen Gasblasen oder eingeschlossenen Mikrokristalliten zur Streuung der im äußeren Mantel 4 geführten Laserstrahlung auf. Die Streuzentren 6 sind bevorzugt nur in einem inneren Volumen des äußeren Mantels 4 vorgesehen, so dass die an den inneren Mantel 3 angrenzende Grenzfläche und die Außenoberfläche des äußeren Mantels 4 keine Störungen aufweisen. Die Gasblasen sind - in Längsrichtung des Lichtleiters 1 gesehen - beispielsweise längliche Luftblasen mit Durchmessern von 100 nm bis 10 µm und mit Längen von 10 bis 1000 µm. Die beiden Enden **7** des Hochleistungslichtleiters 1 sind mit Lichtleitersteckern **8** versehen.

Zur Einkopplung in den Hochleistungslichtleiter 1 wird ein Laserstrahl auf das Eintrittsende des Lichtleiterkerns 2 fokussiert. Dabei kann ein Teil der Laserstrahlung auch in den Lichtleitermantel 3, 4 gelangen. Dies tritt insbesondere bei der notwendigen gegenseitigen Justierung von Laserstrahl und Hochleistungslichtleiter 1 auf. Ebenso kann Strahlungsleistung durch Rückstreuung und Reflexion vom bearbeiteten Werkstück in den Lichtleitermantel 3, 4 gelangen. Dieser in den Lichtleitermantel gelangende Anteil der Laserstrahlung wird weitgehend durch Totalreflexion an der Grenzfläche zwischen äußerem Lichtleitermantel 4 und Umhüllung 5 im Lichtleiter gehalten. Die außerhalb des Lichtleiterkerns 2 geführte Strahlung wird an den Streuzentren 6 gestreut und so - hauptsächlich noch im Bereich des Lichtleitersteckers **8 -** ausgekoppelt. Falls nicht die gesamte Strahlung bereits im Bereich des Lichtleitersteckers 8 ausgekoppelt wird, wird der Rest nach und nach über die gesamte Lichtleiterlänge an den Streuzentren 6 herausgestreut, wobei die dabei jeweils ausgekoppelte Intensität (bei geeigneter Dimensionierung von Hochleistungslichtleiter 1 und Lichtleiterstecker 8) so klein ist, dass die Schutzumhüllung 5 nicht beschädigt wird.

Vom Hochleistungslichtleiter 1 unterscheidet sich der in **Fig. 2** gezeigte Hochleistungslichtleiter **1'** dadurch, dass hier nicht der äußere Mantel 4, sondern die Umhüllung 5 im Wesentlichen über ihre gesamte Länge Streuzentren **6'** zur Streuung der Laserstrahlung aufweist. Dazu ist die Umhüllung 5 beispielsweise durch eine Silikonschicht gebildet, die eine geringere Brechzahl als der äußere Mantel 4 aufweist. Dadurch wird ein Teil der bei der Reflexion an der Grenzfläche zwischen äußerem Mantel 4 und Silikonschicht 5 ein kurzes Stück ins niedrigbrechende Silikon eindringenden Laserstrahlung an den Streuzentren 6' gestreut und ausgekoppelt. Die Streuung erfolgt nur bis zu Eindringtiefen von wenigen µm. Zur Erzeugung der Streuzentren 6' werden dem Silikon Nanopartikel aus Aluminiumoxid mit einem Durchmesser von ca. 5 - 50 nm beigemischt, bevor das Silikon auf den äußeren Mantel 4 aufgebracht wird. An den beiden Enden 7 des Lichtleiters 1, die mit Lichtleitersteckern 8 versehen sind, weist der äußere Mantel 4 einen aufgerauten Oberflächenabschnitt auf, an dem ein Großteil der außerhalb des Lichtleiterkerns 2 geführten Laserstrahlung ausgekoppelt wird.

## Patentansprüche

1. Hochleistungslichtleiter (1; 1') für die Übertragung von Laserstrahlung hoher Leistung (> 500 W) mit einer Strahlqualität von besser 25 mm mrad, mit einem Lichtleiterkern (2) aus insbesondere dotiertem Quarzglas, mit einem den Lichtleiterkern (2) umgebenden inneren Mantel (3) aus insbesondere dotiertem Quarzglas mit niedrigerer Brechzahl als der Lichtleiterkern (2), mit einem den inneren Mantel (3) umgebenden äußeren Mantel (4) aus insbesondere dotiertem Quarzglas mit gleicher oder höherer Brechzahl als der innere Mantel (3) und mit mindestens einer den äußeren Mantel (4) umgebenden Umhüllung (5),
**dadurch gekennzeichnet,**
**dass** der Lichtleiter (1; 1') im Wesentlichen über seine gesamte Länge Streuzentren (6; 6') zur Streuung der außerhalb des Lichtleiterkerns (2) geführten Laserstrahlung aufweist.

2. Hochleistungslichtleiter nach Anspruch 1, **dadurch gekennzeichnet, dass** der äußere Mantel (4) und/oder die Umhüllung (5) die Streuzentren (6; 6') zur Streuung der Laserstrahlung aufweisen.

3. Hochleistungslichtleiter nach Anspruch 1 oder 2, **dadurch gekennzeichnet, dass** die Streuzentren (6; 6') eine in Längsrichtung des Lichtleiters (1; 1') durchgehende Streuschicht bilden.

4. Hochleistungslichtleiter nach einem der vorhergehenden Ansprüche, **dadurch gekennzeichnet, dass** die Streuzentren (6; 6') in Längs- und Umfangsrichtung des Lichtleiters (1; 1') homogen verteilt sind.

5. Hochleistungslichtleiter nach einem der Ansprüche 2 bis 4, **dadurch gekennzeichnet, dass** die im äußeren Mantel (4) vorgesehenen Streuzentren (6) durch im Quarzglas vorhandene, insbesondere länglich geformte Gasblasen, vorzugsweise Luftblasen, gebildet sind.

6. Hochleistungslichtleiter nach Anspruch 5, **dadurch gekennzeichnet, dass** die Gasblasen eine Breite von 100 nm bis 10 µm und eine Länge von 100 nm bis 1000 µm haben.

7. Hochleistungslichtleiter nach einem der Ansprüche 2 bis 4, **dadurch gekennzeichnet, dass** die im äußeren Mantel (4) vorgesehenen Streuzentren (6) durch im Quarzglas vorhandene Mikrokristalle oder Nanopartikel gebildet sind.

8. Hochleistungslichtleiter nach einem der Ansprüche 2 bis 7, **dadurch gekennzeichnet, dass** die im äußeren Mantel (4) vorgesehenen Streuzentren (6) nur in einem inneren Volumen des äußeren Mantels (4) vorgesehen sind.

9. Hochleistungslichtleiter nach einem der Ansprüche 2 bis 4, **dadurch gekennzeichnet, dass** die Umhüllung (5) eine Kunststoffschicht, insbesondere eine Silikonschicht, ist, die eine geringere Brechzahl als der äußere Mantel (4) hat und die die Streuzentren (6') aufweist.

10. Hochleistungslichtleiter nach Anspruch 9, **dadurch gekennzeichnet, dass** die Streuzentren (6') in der Kunststoffschicht durch Nanopartikel oder Nanokristallite mit Durchmessern unter 1 µm, insbesondere aus Aluminiumoxid, gebildet sind.

11. Hochleistungslichtleiter nach einem der vorhergehenden Ansprüche, **dadurch gekennzeichnet, dass** der äußere Mantel (4), insbesondere im Bereich der beiden Lichtleiterenden (7) des Lichtleiters (1; 1'), einen aufgerauten Oberflächenabschnitt zur Auskopplung von im äußeren Mantel (4) geführter Laserstrahlung aufweist.

12. Verfahren zur Auskopplung von in einem Hochleistungslichtleiter nach einem der vorhergehenden Ansprüche außerhalb des Lichtleiterkerns (2) geführter Laserstrahlung,
**dadurch gekennzeichnet,**
**dass** die außerhalb des Lichtleiterkerns (2) geführte Laserstrahlung über die gesamte Länge des Lichtleiters (1; 1') an Streuzentren (6; 6') aus dem Lichtleiter herausgestreut wird, ohne dass dabei die Umhüllung (5) des Lichtleiters beschädigt wird.
